# EUROPEAN PATENT APPLICATION

(11) **EP 1 992 233 A1**
(43) Date of publication of application: **19.11.2008**
(21) Application number: 07009539.3
(22) Date of filing: 11.05.2007
(51) Int. Cl.: A23L 1/015, A23D 9/00, C11B 3/14

(54) **Stabilized marine oils and process of making them**

(71) Applicant: DSM IP Assets B.V., 6411 TE Heerlen (NL)
(72) Inventor: Keller, Andreas, 4310 Rheinfelden (CH); Koschinski, Ingo, 79761 Waldshut-Tiengen (DE); Lustenberger, Albert, 4414 Füllinsdorf (CH); Macfarlane, Neil, 4302 Augst'BL (CH); Meierhans, Thomas, 5073 Gipf-Oberfrick (CH)
(74) Representative: Pressner, Dietmar

(57) **Abstract**

The invention relates to a composition comprising a marine oil or a fraction of a marine oil having a rancimat stability at 100°C of more than 2. It also relates to a process comprising the step of contacting a marine oil or a fraction of a marine oil with steam in a thin film column.

## Description

The present invention relates to stabilized marine oils and a process of making them.

Marine oils have attracted substantial interest as a source of polyunsaturated fatty acids, polyunsaturated fatty acid esters, particularly eicosapentaenoic acid (EPA) and docohexaenoic acid (DHA), which are of dietary significance and/or polyunsaturated fatty acid glycerides. These compounds contain double bonds which render them prone to atmospheric oxidation and/or a fishy taste and smell.

Today there is a lot of convincing evidence that increasing dietary levels of these compounds have beneficial effects on health and can reduce the incidence of death from coronary heart diseases via effects on blood pressure, atherosclerosis, and thrombogenesis.

The increasing interest in these compounds has prompted a research into methods of stabilizing fish oils against oxidation and off-flavor development.

Recently there have been many improvements in stabilizing marine oils and PUFA's by the addition of stabilizing substances.
Hamilton et al., Journal of American Oil and Chemist's Society (JAOCS), Vol. 75, no. 7, p. 813-822, (1998) disclose a very good additive mixture to prevent oxidation, which was not very successful in preventing off-taste and off-smell.

Refined marine oil which has been treated with silica and stabilized with a mixture of lecithin, ascorbyl palmitate and alpha tocopherol in accordance with the procedure described in European Patent Publication 612 346 shows improved rancimat stability and good application performance mainly for health food supplements. Still, in dairy applications such as yoghurts and milk drinks, which are particularly sensitive to smell, the development of smell and taste was observed on some occasions.

EP 999 259 describes how to stabilize PUFA over a long period of time without the occurrence of fishy taste and smell by vacuum steam deodorization at a temperature between about 140° C and about 210° C in the presence of 0.1-0.4% of deodorised rosemary or sage extract.

It is important to remove compounds that give flavor to the oil. It is also useful to remove compounds that are detrimental to the oxidative stability of the oil. It is further desirable to minimize environmental chemicals that are harmful or perceived to be harmful, such as pesticides or polychlorinated biphenyls (PCB). As with many industrial processes it may be useful to reduce the amount of time that is needed to achieve an objective.

Surprisingly, it has been found in the present invention that a marine oil of highly improved purity and stability can be obtained by contacting the marine oil with steam in a thin film column.

While steam deodorization is a common procedure in the production, refinement and purification of marine oils and/or Pufa's no literature exists on the contacting of a marine oil with steam to remove off flavor compounds, particularly 2,6 nonadienal, 3,6, nonadienal and/or 4-heptenal.

Process Technology (Y.H.Hui Ed.), (4), Ch 6 "Edible Oils and Fat Product, p 339-390 describes batch processes to purify oils and fats using steam.

WO 2006/1185518 refers to a continuous or semi-continuous method of deodorizing organic and inorganic fluids using a column with one or more trays with controls to regulate the flow through the trays for quality control.

WO 2004/007654 describes methods to decrease the amount of environmental pollutants in a mixture comprising oil or fat by adding a volatile working fluid, which comprises a fatty acid ester, and stripping that working fluid.

The COMPRO company offers a deodorizer that comprises many plates to remove unwanted products from oils.

The Sulzer company describes on their website (www.sulzerchemtech.com) a method to remove free fatty acids present in vegetable oils with a thin film column including a structured packing.

The invention relates to a composition comprising a marine oil or a fraction of a marine oil having a rancimat stability at 100°C of more than 2, preferably more than 3.8, more preferably more than 6 and most preferably between 10.15 and 20. It also relates to a process comprising the step of contacting a marine oil or a fraction of a marine oil with steam in a thin film column.

Polyunsaturated fatty acids (PUFAs) are classified according to the position of the double bonds in the carbon chain of the molecule as n-9, n-6 or n-3 PUFAs. Examples of n-6 PUFAs are linoleic acid (C18: 2), arachidonic acid (ARA, C20: 4), y-linolenic acid (GLA, C18: 13) and dihomo- y -linolenic acid (DGLA, C20 : 3). Examples of n-3 PUFAs include α-linolenic acid (C18 : 13), eicosapentaenoic acid (EPA, C20 : 5), docosahexaenoic acid (DHA, C22: 6) and docosapentanoic acid (DPA). Especially EPA and DHA have attracted interest of the food industry in recent years. The most available sources of these two fatty acids are fish and the marine oils extracted from them.

As in many other publications the term PUFA in this invention also encompasses polyunsaturated fatty acid esters, like polyunsaturated fatty acid alkyl ester, preferably an ethyl ester, more preferably having a FAST index of below 2, preferably between 1-2.

As in many other publications the term PUFA in this invention also encompasses polyunsaturated fatty acid glycerides, preferably an unsaturated fatty acid triglyceride, more preferably having a FAST index of below 1.5, most preferably between 1-1.3.

Sometimes the gylcerides and/or triglycerides are reconstituted and are therefore also of interest in the present invention.

2,6 nonadienal, 3,6, nonadienal and 4-heptenal are molecules that contribute to the unwanted smell and/or reduced stability in marine oils. They are also measured in the FAST index. In one embodiment of the invention the removal of these compounds is achieved.

The compositions of the inventions can further comprise an organic carrier molecule common in food, feed and/or cosmetic formulations.

In preferred embodiments of the invention the composition s are further processed into a powder, a premix, a granular composition, a beadlet, a supplement, a tablet, a pill, a lotion, a solution or an emulsion.

As described above stabilization of marine oils through the addition of stabilizers are common and are included as a preferred embodiment of the invention. Particular examples of stabilizers include ascorbic acid, ascorbyl palmitate, BHT, t butyl hydroquinone (TBHQ), Herbalox, a rosemary extract, a sage extract, a lecithin and citric acid.

The invention provides for a breakthrough in industrial processes to treat marine oils. There is a considerable increase of production per time. Values of more than 10 kg per hour can be achieved. Preferably the yield of product is more than 100 kg per hour or even 1000 kg per hour. Therefore it is preferred to obtain industrial meaningful quantities of marine oils or fraction of marine oils. Preferred packaging sizes include sample weighing more than 4 kg, preferably more than 19 kg, more preferably more than 170 kg, and most preferably more than 900 kg.

In one special embodiment of the invention the process is performed in a thin film column which has a structured packing. There is many structured packaging known for thin film columns. In one particular embodiment a corrugated sheet metal packing provides for excellent results. There is a multitude of commercially available packaged columns, which include a Sulzer Mellapak, a Sulzer Mellapak Plus, a Sulzer gauge packing BX, BX Plus or CY, a Sulzer Metallagrid, a Nutter grid, or a Katapak-SP, a Sulzer Mellacarbon, a Kühne Rombopak or a Zehua Sepak packing, which are therefore included in this invention.

The contacting with steam can be done in a variety of ways. In one particularly effective way, the marine oil or the fraction of the marine oil us added on top of the column and the steam is added at the bottom. While the invention can be performed as a batch-type process, it is preferred to run the process in a continuous matter. In one preferred embodiment of the invention the column is therefore operated as a counter current steam column.

The inventors currently have reason to believe that the number of theoretical stages in the thin film column has an influence on the quality of the process. In one preferred embodiment the thin film column is operated with more than 10, preferably more than 50 and more preferably between 60 and 100 theoretical stages. It is particularly preferred if the column would not have physical plates at all, although it is currently believed that 1 physical plate will not reduce the advantages of the process of the invention and even 2 physical plates could be acceptable.

It has been observed that the difference in pressure drop between the top of the column and the bottom of the column has in some instances an influence on the composition that is produced. Therefore in a preferred embodiment of the invention thin film column has a pressure drop between bottom to top of less than 5mbar/m, preferably less than 2mbar/m or more preferred between 0.01 and 1 mbar/m.

It can also be observed that the ratio between the marine oil and the steam provides for a variable in the result of the process. It is currently preferred in some embodiments to operate the thin film column at a marine oil to steam ratio is between 1000: 1 to 10:1, preferably 500:1 to 20:1, more preferably 200:1 to 50:1, and most preferably 160:1 to 70:1 based on the weight of the marine oil and the steam.

The current process provides for effective usage of raw materials. It has been observed that it can reduce the waste considerably. In a preferred embodiment the mass balance of the marine oil before contacting with the steam and after contacting with the steam is less than 5% by weight.

The physical metrics of the column will have an impact at least on the economics of the process. Therefore it is preferred to have a thin film column between 0.5 to 20 meters active packing, preferably 1 to 12 meters, more preferably 2-10 meters.

The average production time of the marine oil can be reduced with the current process. One reason might be the particularly short residence time in the thin-film column. In one particularly preferred embodiment of the invention the thin film column provides a residence time for the liquid phase between 0.5 to 60 min, 5 to 30 min, 2 to 20 min and 5 to 10 min.

It is preferred to have a residence time of the gas phase between 0.5 to 10 seconds.

There is a variety of oils that can be used in the process. While marine oils are estimated to provide only for 1-2 % of the worlds non petrochemical-oil production, it is at present one preferred embodiment of the invention. Therefore preferred examples of marine oils include menhaden oil, herring oil, sardine oil, anchovy oil, pilchard oil, tuna oil, hake oil, harp seal oil, catfish oil, capelin oil, red fish oil, white fish oil, mackerel or jack mackerel oil, sand eel oil, norway pout oil, salmon oil, pollock liver oil, capelin oil, herring oil, red fish oil, tuna oil, blue whitening oil, white fish oil, sprat oil, dogfish liver oil, or mixtures.

The invention claims also fraction of marine oils. It should be apparent for the person of skill that there are various qualities of marine oils available for this process. Some will be sold with more ourity steps before they will be processed according to the invention, some will have less of these common treatment steps. Particularly the invention comprises embodiments where degummed marine oil, deacidified marine oil, refined marine oil, neutralized marine oil, bleached marine oil and/or deodorized marine oil can be used singly or in mixtures.

In one particular embodiment of the invention the the marine oil comprises a polyunsaturated acid glyceride and/or triglyceride and/or reconstituted glyceride and/or triglyceride, where the temperature of the marine oil is preferably between 80°C to 250°C, preferably 100°C to 230°C, more preferably 180°C to 220°C.

In another embodiment the marine oil comprises a polyunsaturated acid alkyl ester, preferably an ethyl ester, whereby the marine oil then should have a temperatures between 60°C to 200°C, preferably 80°C to 180°C, more preferably 105°C to 150°C.

In one embodiment the temperature of the steam is between 100°C and 290°C.

It will be understandable that the process works best in a vacuum. In a special embodiment the thin film column has a vacuum of between 0.1 to 10 mbar, preferably between 0.5 to 5 and more preferably between 1 to 2 mbar.

As described above a variety of process steps can be added around the processing of the invention. One preferred step is degassing. In a special embodiment of the invention the process of comprises degassing the marine oil, preferably before the contacting with the steam, more preferably degassing to less than less than 1 ppm by volume of the marine oil of 02, most preferably 0,5 ppm.

Another special step is evaporation of water. It is an improvement to evaporate the marine oil, preferably before the contacting with the steam, more preferably to less than 50 ppm water (based on the weight of the marine oil), most preferably to between 1-50 ppm of water.

As described above it can be advisable to add a stabilizer. In one special embodiment rosemary extract is added to the marine oil, preferably before contacting, more preferably before degassing. It is also encompassed by the present invention to add a stabilizer after the contacting with the steam. In several cases it can be advantageous to add the extract before and after contacting to the marine oil.

The main market for compositions of the invention is the food market. But it is also thinkable that in the feed market there are interesting examples of applications. The pet food market is also of interest in the context of the present invention. There are several application contemplated in the cosmetic market as well. In a preferred embodiment of the invention the composition and/or the product of the process of the invention are contained in a food application. Special field of interest for such a pure and stable marine oil are a dairy product, an infant nutrition product or baby food product. Specific examples include a beverage or a cereal. More detailed it is planned to apply that composition in milk, joghurt and/or fruit juice.

It is very important to mention that there are various applications known in the industry where citrus flavors are added to compensate for off- smell and taste of marines oil and/or fractions of marine oils and/or PUFA's and PUfA (alkyl)esters and (tri)glycerides. The current invention can operate without such additives. In fact it is preferred to not add them, because it might interefere with the natural defense mechanism of the human body to detact spoiled food. It will be equally clear to the person of to skil1 that theses additives can also be added without leaving the scope of the invention.

It is worthwhile to mention that there are several application in the pharmaceutical industry. Therefore pharmaceutical compositions comprising the composition of the invention are encompassed in the present invention.
The invention is illustrated further by the following examples without being limited thereto.

### Example 1

A distilled ethyl-ester concentrate of a marine oil was treated in a counter current steam thin film column under the following operation conditions:
Temperature: 150 C
Pressure: 1- 2 mbar
Feed rate oil: 100 kg/h
Steam rate: 1.8 kg/h
These ethyl ester concentrate of marine oils treated under these conditions have shown excellent sensory properties and rancimat stability (see table 1), which can be further enhanced by addition of stabilizer comprising antioxidants.

As is common in the industry the oil obtained was evaluated for stability on a Rancimat RTM apparatus (Metrohm Ltd., CH-9101 Herisau, Switzerland) at 100 C°. The measurement value represents the length of time in hours until the oil reaches the onset of rancidity. Table 1 shows the oxidative stability improvement of this new process and for comparison includes the oxidative stabilities of several commercial ester products.

**Table 1 Oxidative stabilities of some commercial n-3 ester concentrates**

| ***Sample*** | **Rancimat stability at 100°C (hours)** | **Predicted stability in air at 20°C (hours/days)** | **Predicted stability in air at 10°C (days)** |
|---|---|---|---|
| Croda 3322EE | 0.4 | 102.4/4.3 | 8.6 |
| Triomega | 0.8 | 204.8/8.6 | 17.2 |
| Esapent | 0.5 | 128/5.3 | 10.6 |
| Croda 4020EE | 1.1 | 281.6/11.7 | 23.4 |
| ONC 4020EE - unstabilised | 0.4 | 102.4/4.3 | 8.6 |
| EPAX 6000EE (4020) | 0.9 | 230.4/9.6 | 19.2 |
| ONC4020EE stabilised | 1.1 | 281.6/11.7 | 23.4 |
| Ropufa 75EE | 1.8 | 460.8/19.2 | 38.4 |
| Example 1 | 4.0 | 1022/42.7 | 85.3 |

### Example 2

A part refined marine oil was preheated in a thin film evaporator at 150 C and under vacuum of 30 mbar. Immediately afterward the oil is contacted with steam in a counter current thin film column (diameter 250 mm, length 8 meter, packing unit Sulzer BX) under the following conditions:
Temperature: 210 C
Pressure: 1 - 2 mbar
Feed rate oil: 100 kg/h
Steam rate: 1.8 kg/h
The oil is cooled after steam treatment and FAST values are measure (see table 2). The equation used is the following: Fish Taste (FAST) = 1+(0,31 A) + (0.11 B) +(0.03C) With A= 2,6 nonadienal, B= 4-heptenal, C 3,6, nonadienal concentrations (all in ppb).

With this model it is possible to give a good sensory picture of the examples of the invention and a range of commercial available products. Commercially available oils (Glycerides), which are more stable that (alkyl)ester concentrates, have FAST values in the range 20-100 and ester concentrates have values in the range 60-2,500. This means all of these products can be fishy even though oxidation may not be more than a few ppm. It explains why the "repeat" phenomenon is common with n-3 supplements and why many problems occur in the processing and consumption of these products. Fast values for some commercial concentrates and reconstituted triglycerides are given in Table 2.

**Table 2 FAST values of commercial oils, ester concentrates and reconstituted glycerides**

| Sample | FAST Value |
|---|---|
| EPAX 6000EE (4020) | 2068 |
| EPAX 6000TG | 2396 |
| EPAX 4510TG | 1997 |
| EPAX 1050TG | 1531 |
| Croda 332EE | 111 |
| ONC 4020EE | 125 |
| Croda TG3322 | 82 |
| Croda TG0525 | 1073 |
| Ropufa 75 EE | 2-3 |
| Example 1 | 1.5 - 2 |
| Ropufa Food oil | 1.5 |
| Example 2 | 1-1.3 |

Further experiments have been done by mixing material from example 2 with antioxidants to improve the oxidative stability of these products and some results are recorded below. It is clear to the person of skill that this selection is not meant to be limiting to the scope of the invention.

TBHQ has long been known to be a powerful anti-oxidant. Unexpectedly we have found it to be a strong synergist with rosemary oil. Ropufa food oil containing 0.2% rosemary, 200 ppm ascorbyl palmitate and 1000 ppm mixed tocopherols has a Rancimat induction time of 5.4 hours at 100C. If the tocopherol is replaced with 200ppm of TBHQ the induction time increases to over 10 hours at 100C.
Results for the oxidative stabilities of Ropufa food oil containing different combinations of herb phenolics and TBHQ are given below in table 3. In every case the Rancimat time of 4 hours is exceeded

**Table 3 Rancimat stabilities of stabilized oils and esters**

| | | |
|---|---|---|
| Antioxidant system | Inclusion levels | RIT hrs at 100°C |
| TBHQ | 100ppm | 4.6 |
| TBHQ | 200ppm | 8.3 |
| TBHQ | 200ppm | 6.9 |
| Ascorbic Acid | 200ppm | |
| TBHQ | 200ppm | 9.4 |
| Herbalox | 0.20% | |
| TBHQ | 200ppm | 9.2 |
| Herbalox | 0.20% | |
| Ascorbic acid | 200ppm | |
| TBHQ | 200ppm | 10.2 |
| Herbalox | 0.20% | |
| Ascorbyl palmitate | 200ppm | |
| TBHQ | 100ppm | 5.6 |
| BHT | 100ppm | |
| TBHQ | 200ppm | 4.0 |
| Robertet Herbor L5 | 0.20% | |
| TBHQ | 200ppm | 6.2 |
| Rosemary viscous | 0.40% | |
| TBHQ | 200ppm% | 7.4 |
| Rosemary powder | 0.15% | |
| Sage viscous | 0.10% | 7.2 |
| TBHQ | 200ppm | |
| Sage viscous | 0.10% | 6.0 |
| TBHQ | 200ppm | |
| Ascorbyl Palmitate | 200ppm | |
| Sage viscous | 0.10% | 8.4 |
| TBHQ | 200ppm | |
| Citric acid | 200ppm | |

## Claims

1. A composition comprising a marine oil or a fraction of a marine oil having a rancimat stability at 100°C of more than 2, preferably more than 3.8, more preferably more than 6 and most preferably between 10.15 and 20.

2. The composition of claim 1, wherein the marine oil or the fraction of the marine oil further comprises
a) a polyunsaturated fatty acid;
b) a polyunsaturated fatty acid alkyl ester, preferably an ethyl ester, more preferably having a FAST index of below 2, preferably between 1-2;
c) a polyunsaturated fatty acid glyceride, preferably an unsaturated fatty acid triglyceride, more preferably having a FAST index of below 1.5, most preferably between 1-1.3; and/or
d) a reconstituted polyunsaturated fatty acid glyceride, preferably a reconstituted polyunsaturated fatty acid triglyceride.

3. The composition of claim 1, further comprising at least one organic carrier molecule common in food, feed and/or cosmetic formulations.

4. The composition of claim 1, which is a powder, a premix, a granular composition, a beadlet, a supplement, a tablet, a pill, a lotion, a solution or an emulsion.

5. The composition of claim 1, further comprising at least one stabilizer selected from the group of ascorbic acid, ascorbyl palmitate, BHT, TBHQ, Herbalox, a rosemary extract, a sage extract, a lecithin and citric acid.

6. The composition of claim 1, weighing more than 4 kg, preferably more than 19 kg, more preferably more than 170 kg, and most preferably more than 900 kg.

7. A process comprising the step of contacting a marine oil or a fraction of a marine oil with steam in a thin film column.

8. The process of claim 7, further comprising the step of removing at least one of the molecules selected from the group of 2,6 nonadienal, 3,6, nonadienal and 4-heptenal.

9. The process of claim 7, wherein the thin film column has a structured packing, preferably a corrugated sheet metal packing, more preferably a Sulzer Mellapak, a Sulzer Mellapak Plus, a Sulzer gauge packing BX, BX Plus or CY, a Sulzer Metallagrid, a Nutter grid, or a Katapak-SP, a Sulzer Mellacarbon, a Kühne Rombopak or a Zehua Sepak packing.

10. The process of claim 9, wherein the thin film column is operated as a counter current steam column.

11. The process of claim 7, wherein the thin film column has more than 10, preferably more than 50 and more preferably between 60 and 100 theoretical stages.

12. The process of claim 7, wherein the thin film column has a the pressure drop between bottom to top of less than 5mbar/m, preferably less than 2mbar/m or more peferred between 0.01 and 1 mbar/m.

13. The process of claim 7, wherein the marine oil to steam ratio is between 1000: 1 to 10:1, preferably 500:1 to 20:1, more preferably 200:1 to 50:1, and most preferably 160:1 to 70:1.

14. The process of claim 7, wherein the marine oil comprises at least one polyunsaturated fatty acid and/or one polyunsaturated fatty acid ester and/or polyunsaturated fatty acid glyceride.

15. The process of claim 7, wherein the mass balance of the marine oil before contacting with the steam and after contacting with the steam is less than 5% by weight.

16. The process of claim 7, wherein the marine oil comprises an oil selected from the group of menhaden oil, herring oil, sardine oil, anchovy oil, pilchard oil, tuna oil, hake oil, harp seal oil, catfish oil, capelin oil, red fish oil, white fish oil, mackerel or jack mackerel oil, sand eel oil, norway pout oil, salmon oil, pollock liver oil, capelin oil, herring oil, red fish oil, tuna oil, blue whitening oil, white fish oil, sprat oil and dogfish liver oil.

17. The process of claim 7, wherein the fraction of the marine oil comprises degummed marine oil, deacidified marine oil, refined marine oil, neutralized marine oil, bleached marine oil and/or deodorized marine oil.

18. The process of claim 7, wherein the thin film column comprises between 0.5 to 20 meters active packing, preferably 1 to 12 meters, more preferably 2-10 meters.

19. The process of claim 7, wherein the thin film column provides a residence time for the liquid phase between between 0.5 to 60 min, 5 to 30 min, 2 to 20 min and 5-10 min.

20. The process of claim 7, wherein the thin film column provides a residence time for the gas phase between between 0.5 to 10 seconds.

21. The process of claim 7, wherein the marine oil comprises a polyunsaturated acid glyceride.

22. The process of claim 21, wherein the marine oil has a temperatures between 80°C to 250°C, preferably 100°C to 230°C, more preferably 180°C to 220°C.

23. The process of claim 7, wherein the marine oil comprises a polyunsaturated acid alkyl ester, preferably an ethyl ester.

24. The process of claim 23, wherein the marine oil has a temperatures between 60°C to 200°C, preferably 80°C to 180°C, more preferably 105°C to 150°C.

25. The process of claim 7, wherein the steam is between a temperature of 100°C and 290°C.

26. The process of claim 7, wherein the column has a vacuum of between 0.1 to 10 mbar, preferably between 0.5 to 5 and more preferably between 1 to 2 mbar.

27. The process of claim 7, further comprising degassing the marine oil, preferably before the contacting with the steam, more preferably degassing to less than less than 1 ppm by volume of the marine oil of oxygen (02), most preferably 0,5 ppm.

28. The process of claim 7, further comprising evaporating the marine oil, preferably before the contacting with the steam, more preferably to less than 50 ppm water (based on the weight of the marine oil), most preferably to between 1-50 ppm of water.

29. The process of claim 7, further comprising adding a stabilizer comprising rosemary extract to the marine oil, preferably before contacting, more preferably before degassing.

30. Food comprising the composition of claim 1, preferably a dairy product, a beverage or a cereal, an infant nutrition or baby food product, more preferably milk, joghurt or fruit juice.

31. A pharmaceutical composition comprising the composition of claim 1.
